(19) Europäisches Patentamt
European Patent Office
Office européen des brevets

(11) **EP 1 862 913 A2**

(12) **EUROPEAN PATENT APPLICATION**

(43) Date of publication:
**05.12.2007 Bulletin 2007/49**

(51) Int Cl.:
***G06F 17/14*** *(2006.01)*

(21) Application number: **07108834.8**

(22) Date of filing: **24.05.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **30.05.2006 JP 2006150057**

(71) Applicant: **ONO SOKKI CO., LTD.**
**Yokohama-shi,**
**Kanagawa-ken 226-8507 (JP)**

(72) Inventor: **Oie, Samon**
**Midori-ku**
**Yokohama-shi, Kanagawa 226-8507 (JP)**

(74) Representative: **Fenlon, Christine Lesley**
**Haseltine Lake**
**5th Floor, Lincoln House**
**300 High Holborn**
**London WC1V 7JH (GB)**

(54) **Spectrum interpolation method, spectrum interpolation apparatus, and spectrum interpolation program storage medium**

(57)    A spectrum interpolation method obtains a spectrum value at an arbitrary frequency by interpolating discrete spectra obtained through sampling one period or a periodic function at N sampling points to perform a Fourier transform. The spectrum value Fp($\omega$) at the arbitrary frequency f = $\omega/2\pi$ is obtained in accordance with the following formula or any of formulae equivalent to the following formula

$$F_p(\omega) = \sum_{k=0}^{N-1} F_p\left(\omega_0 + k\cdot\Delta\omega\right)\cdot\Psi\left(\omega - \left(\omega_0 + k\cdot\Delta\omega\right)\right)$$

where

$$\Psi(\omega) = \frac{1}{N}\cdot\exp\left(-j\frac{(N-1)\pi\cdot\omega}{N\Delta\omega}\right)\cdot\frac{\sin\left(\frac{\pi\cdot\omega}{\Delta\omega}\right)}{\sin\left(\frac{\pi\cdot\omega}{N\cdot\Delta\omega}\right)}$$

(where $\omega$ is an angular frequency of interest, $F_p(\omega)$ is the spectrum value at the angular frequency $\omega$, $\Delta\omega$ is the distance between discrete spectra, $\omega_0$ is an arbitrary reference angular frequency, including $\omega_0 = 0$, and $\psi(\omega)$ is an interpolation function).

**(Cont. next page)**

Fig. 10

**Description**

BACKGROUND OF THE INVENTION

Field of the Invention

The present invention relates to a spectrum interpolation method, a spectrum interpolation apparatus and a spectrum interpolation program storage medium. The spectrum interpolation method and spectrum interpolation apparatus are for obtaining a spectrum from discrete spectra generated by calculation such as the FFT (Fast Fourier Transform), while the spectrum at the arbitrary frequency is between two of the discrete spectra and is not included in the discrete spectra. The spectrum interpolation program storage medium stores a spectrum interpolation program that is executed on an information processing device and that causes the information processing device to function as the spectrum interpolation apparatus.

Description of the Related Art

Conventionally, spectrum analysis, for example, for a waveform changing over time, has been often used in various fields. FFT algorithms are used for the spectrum analysis.

In this FFT, a time domain waveform is treated as a periodic function and sampled at predetermined time intervals to obtain values at N discrete sampling points in one period of the periodic function. Then, a calculation is performed based on the values at the sampling points to obtain spectra at N discrete frequencies (see a non-patent document, http://www.kurims.kyotou.ac.jp/~ooura/fftman/index.html).

In the FFT approach described above, there is a limit for performing a detail spectrum analysis, while a spectrum at a frequency between the discrete points is not shown because what can be obtained are spectra at discrete frequencies. It can be obtained to increase the number of sampling points ("N" given above). However, in this case, it is not realistic because a calculation amount of FFT will be massive. In addition, even when the number of sampling points is increased, the sample points are still discrete and a spectrum at an arbitrary-frequency cannot be obtained.

SUMMARY OF THE INVENTION

Accordingly, it is desirable to provide a spectrum interpolation method and a spectrum interpolation apparatus Which make it to interpolate a at an arbitrary frequency with high precision from discrete spectra and a spectrum interpolation program storage medium which stores a spectrum interpolation program that allows an information processing device to function as the spectrum interpolation apparatus capable of performing such highly precise interpolation.

According to an embodiment of a first aspect of the present invention, there is provided a spectrum interpolation method for obtaining a spectrum value at an arbitrary frequency by interpolating discrete spectra obtained by sampling one period of a periodic function at N sampling points to perform a Fourier transform, wherein the spectrum value $F_P$ ($\omega$) at the arbitrary frequency f = $\omega/2\pi$ is obtained in accordance with the following formula or any of formulae equivalent to the following formula

[Formula 1]

$$F_p(\omega) = \sum_{k=0}^{N-1} F_p(\omega_0 + k \cdot \Delta\omega) \cdot \Psi(\omega - (\omega_0 + k \cdot \Delta\omega))$$

where
[Formula 2]

$$\Psi(\omega) = \frac{1}{N} \cdot \exp\left(-j \frac{(N-1)\pi \cdot \omega}{N\Delta\omega}\right) \cdot \frac{\sin\left(\frac{\pi \cdot \omega}{\Delta\omega}\right)}{\sin\left(\frac{\pi \cdot \omega}{N \cdot \Delta\omega}\right)}$$

where

ω is an angular frequency of interest,
$F_P(\omega)$ is the spectrum value at the angular frequency ω,
Δω is a distance between discrete spectra,
ωo is an arbitrary reference angular frequency, including ωo = 0, and
$\Psi(\omega)$ is an interpolation function.

According to a spectrum interpolation method embodying the present invention, it is possible to obtain a spectrum value at an arbitrary frequency with a considerably high precision without an error in principle at least in accordance with the formula given above, a method for deriving of which will be described later.

Here, an example of the equivalent formulae of a spectrum interpolation method embodying the present invention, the following is included.

[Formula 3]

$$F_p(\omega) = R_p(0) \cdot \Psi(\omega) + R_p\left(\frac{N}{2} \cdot \Delta\omega\right) \cdot \Psi\left(\omega - \left(\frac{N}{2} \cdot \Delta\omega\right)\right)$$
$$+ \sum_{k=1}^{N/2-1} F_p(k \cdot \Delta\omega) \cdot \Psi(\omega - k \cdot \Delta\omega) + \sum_{k=1}^{N/2-1} \left(F_p(k \cdot \Delta\omega)\right)^* \cdot \Psi(\omega + k \cdot \Delta\omega)$$

where

$R_P(k)$ is the real part of a complex number $F_P(k)$, and
$F_P(k)^*$ is the conjugate complex number of $F_P(k)$.

A method for deriving the formula given above will be described later.

The equivalent formulae mentioned above include variations of the formula and simplified formulae that include an error in interpolation, in addition to the form of the formula given above.

In addition, according to an embodiment of a second aspect of the present invention, there is also provided a spectrum interpolation apparatus which obtains a spectrum value at an arbitrary frequency by interpolating discrete spectra obtained through sampling one period of a periodic function at N sampling points to perform a Fourier transform, the apparatus including:

an acquisition section which obtains the discrete spectra;
a calculation section which obtains the spectrum value $F_P(\omega)$ at the arbitrary frequency f = ω/2π in accordance with the following formula or any of formulae equivalent to the following formula
[Formula 4]

$$F_p(\omega) = \sum_{k=0}^{N-1} F_p(\omega_0 + k \cdot \Delta\omega) \cdot \Psi(\omega - (\omega_0 + k \cdot \Delta\omega))$$

where
[Formula 5]

$$\Psi(\omega) = \frac{1}{N} \cdot \exp\left(-j\frac{(N-1)\pi \cdot \omega}{N\Delta\omega}\right) \cdot \frac{\sin\left(\frac{\pi \cdot \omega}{\Delta\omega}\right)}{\sin\left(\frac{\pi \cdot \omega}{N \cdot \Delta\omega}\right)}$$

where

ω is an angular frequency of interest,
$F_P(\omega)$ is the spectrum value at the angular frequency $\omega$, $\Delta\omega$ is a distance between discrete spectra,
ωo is an arbitrary reference angular frequency, including ωo = 0, and
$\Psi(\omega)$ is an interpolation function; and

an output section which outputs the spectrum value $F_P(\omega)$ obtained by the calculation section.

Here, in a spectrum interpolation apparatus embodying the present invention, the calculation section may obtain the spectrum value $F_P(\omega)$ at the arbitrary frequency f = ω/2π in accordance with the following formula
[Formula 6]

$$F_p(\omega) = R_p(0)\cdot\Psi(\omega) + R_p\left(\frac{N}{2}\cdot\Delta\omega\right)\cdot\Psi\left(\omega - \left(\frac{N}{2}\cdot\Delta\omega\right)\right)$$
$$+ \sum_{k=1}^{N/2-1} F_p(k\cdot\Delta\omega)\cdot\Psi(\omega - k\cdot\Delta\omega) + \sum_{k=1}^{N/2-1}\left(F_p(k\cdot\Delta\omega)\right)^*\cdot\Psi(\omega + k\cdot\Delta\omega)$$

which is one of the equivalent formulae,
where
$R_P(k)$ is the real part of a complex number $F_P(k)$, and
$F_P(k)^*$ is the conjugate complex number of $F_P(k)$.

In addition, in a spectrum interpolation apparatus embodying the present invention, the acquisition section obtains the discrete spectra and the obtaining mode does not the matter. For example, the acquisition section may read the discrete spectra stored beforehand or may by itself perform a FFT calculation to obtain the discrete spectra.

In addition, calculations in the calculation section include calculations of all modes corresponding to the modes of the spectrum interpolation method described above.

Further, the output section may display, print, transmit through a communication line, or output in a mode the spectrum value obtained by the calculation section.

In addition, according to an embodiment of a third aspect of the present invention, there is provided a storage spectrum interpolation program storage medium storing a spectrum interpolation program which is executed in a program executing information processing device-and causes the information processing device to function as a spectrum interpolation apparatus which obtains a spectrum value at an arbitrary frequency by interpolating discrete spectra obtained through sampling one period of a periodic function at N sampling points to perform a Fourier transform, the apparatus including:

an acquisition section which obtains the discrete spectra;
a calculation section which obtains the spectrum value $F_P(\omega)$ at the arbitrary frequency f = ω/2π in accordance with the following formula or any of formulae equivalent to the following formula

[Formula 7]

$$F_p(\omega) = \sum_{k=0}^{N-1} F_p(\omega_0 + k\cdot\Delta\omega)\cdot\Psi(\omega - (\omega_0 + k\cdot\Delta\omega))$$

where
[Formula 8]

$$\Psi(\omega) = \frac{1}{N} \cdot \exp\left(-j\frac{(N-1)\pi \cdot \omega}{N\Delta\omega}\right) \cdot \frac{\sin\left(\dfrac{\pi \cdot \omega}{\Delta\omega}\right)}{\sin\left(\dfrac{\pi \cdot \omega}{N \cdot \Delta\omega}\right)}$$

where

$\omega$ is an angular frequency of interest,
$F_P(\omega)$ is the spectrum value at the angular frequency $\omega$,
$\Delta\omega$ is a distance between discrete spectra,
$\omega o$ is an arbitrary reference angular frequency,
including $\omega o = 0$, and
$\Psi(\omega)$ is an interpolation function; and
an output section which outputs the spectrum value $F_P(\omega)$ obtained by the calculation section.

Here, the calculation section may obtain the spectrum value $F_P(\omega)$ at the arbitrary frequency $f = \omega/2\pi$ in accordance with the following formula
[Formula 9]

$$F_p(\omega) = R_p(0) \cdot \Psi(\omega) + R_p\left(\frac{N}{2} \cdot \Delta\omega\right) \cdot \Psi\left(\omega - \left(\frac{N}{2} \cdot \Delta\omega\right)\right)$$

$$+ \sum_{k=1}^{N/2-1} F_p(k \cdot \Delta\omega) \cdot \Psi(\omega - k \cdot \Delta\omega) + \sum_{k=1}^{N/2-1} \left(F_p(k \cdot \Delta\omega)\right)^* \cdot \Psi(\omega + k \cdot \Delta\omega)$$

which is one of the equivalent formulae,
where

$R_P(k)$ is the real part of a complex number $F_P(k)$, and
$F_P(k)^*$ is the conjugate complex number of $F_P(k)$.

A spectrum interpolation program storage medium embodying the present invention includes modes corresponding to the modes of the spectrum interpolation apparatus.
According to an embodiment of the present invention, a spectrum value at an arbitrary frequency between discrete points on a frequency axis can be interpolated with high precision.

BRIEF DESCRIPTION OF THE DRAWINGS

An exemplary embodiment of the present invention will be described in detail with reference to the following drawings.
Fig. 1 is an external perspective view of a computer.
Fig. 2 shows a hardware configuration of the computer whose external appearance is shown in Fig. 1.
Fig. 3 is a conceptual diagram showing a CD-ROM in which a spectrum interpolation program is stored.
Fig. 4 shows a functional configuration of a spectrum interpolation apparatus according to an embodiment of the present invention.
Fig. 5 shows a damping oscillation waveform;
Fig. 6 shows spectra of data windowed with a Hanning window shown in Fig. 5.
Fig. 7 is an enlarged view of a portion of Fig. 6.
Fig. 8 shows a beat waveform.
Fig. 9 shows spectra of data windowed with a Hanning window shown in Fig. 8.
Fig. 10 is an enlarged view of a portion of Fig. 9.

DETAILED DESCRIPTION OF THE INVENTION

The embodiment of the present invention will be described below.

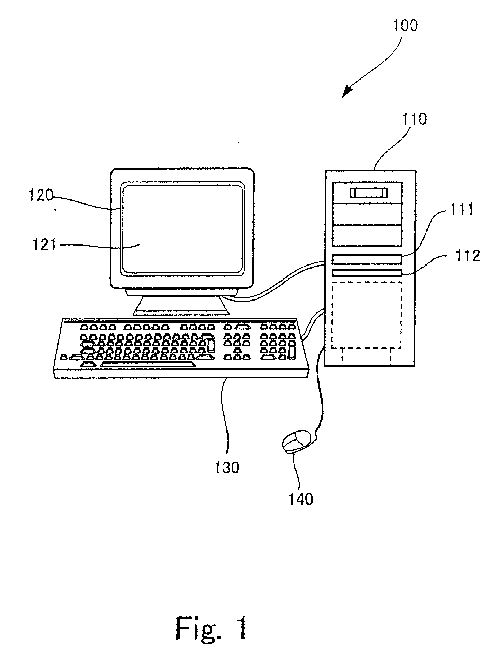

Fig. 1 is an external perspective view of a computer. This computer functions as a spectrum interpolation apparatus of an embodiment of the present invention by executing a program described later.

The computer 100 show in Fig. 1 includes, as an external appearance configuration, a main unit 110, an image display unit 120 which displays an image on a display screen 121 in response to an instruction from the main unit 110, a keyboard 130 for inputting various kinds of information in response to key operations into the main unit 110, and a mouse 140 for pointing a position on the display screen 121 to input an instruction associated with an object, for example an icon, displayed at the position. The main unit 110 includes, as an external appearance, a flexible disk (hereinafter abbreviated as FD) slot 111 for loading an FD and a CD-ROM slot 112 for loading a CD-ROM.

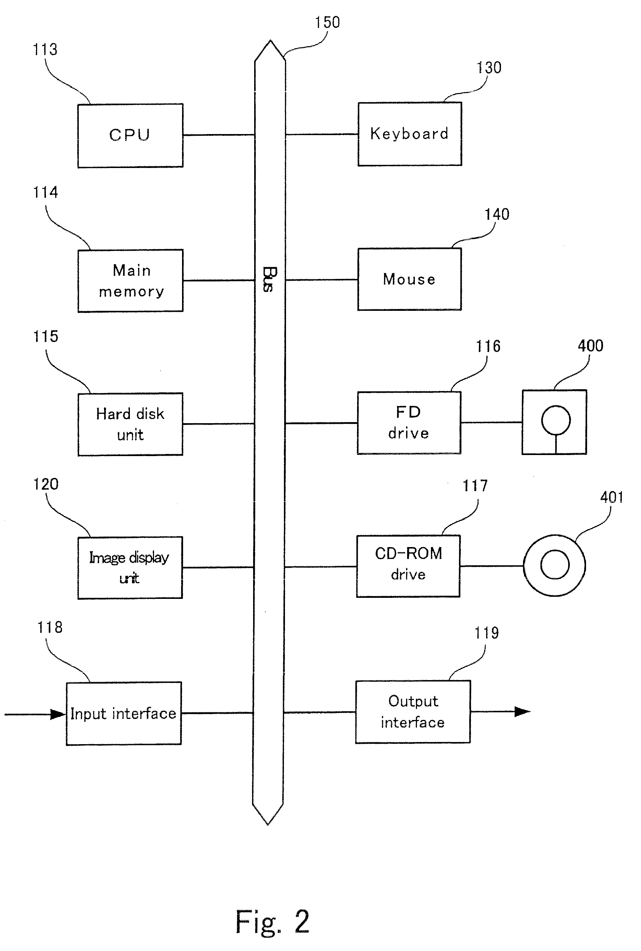

Fig. 2 shows a hardware configuration of the computer 100 shown in the external view of Fig. 1.

As shown in Fig. 2, included in the main unit 110 are a CPU 113 which executes programs, a main memory 114 into which a program stored in a hard disk unit 115 is read and loaded for execution by the CPU 113, the hard disk unit 115 in which programs and data are stored, an FD drive 116 which accesses an FD 400, a CD-ROM drive 117 which accesses a loaded CD-ROM 401, an input interface 118 through which a signal is input from an external source such as an external sensor, and an output interface 119 through which the result of a calculation is output to an external device. These components and the image display unit 120, keyboard 130, and mouse 140 shown in Fig. 1 are interconnected through a bus 150.

Stored on the CD-ROM 401 is a spectrum interpolation program for causing the computer 100 to function as a spectrum interpolation apparatus according to an embodiment of the present invention. The CD-ROM 401 is loaded into the CD-ROM drive 117 and the spectrum interpolation program stored on the CD-ROM 401 is uploaded into the computer and stored in the hard disk unit 115. When the spectrum interpolation program is activated and executed on the computer 100, the computer 100 operates as a spectrum interpolation apparatus according to an embodiment of the present invention.

While the CD-ROM 401 is illustrated as a storage medium in which the spectrum interpolation program is stored in the example, the storage medium for storing the spectrum interpolation program is not limited to a CD-ROM. Any of other types of storage media such as an optical disk, MO, FD, and magnetic tape may be used.

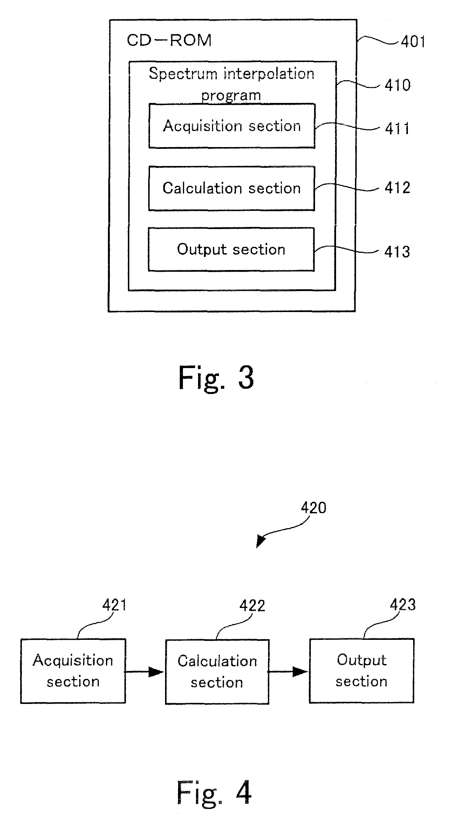

Fig. 3 is a conceptual diagram showing a CD-ROM 401 in which the spectrum interpolation program is stored.

Stored on the CD-ROM 401 shown in Fig. 3 is the spectrum interpolation program 410 including an acquisition section 411, a calculation section 412, and output section 413.

The computer 100 shown in Figs. 1 and 2 also includes an FFT analyzer function that receives a time domain signal from the outside and performs FFT calculations to the time domain signal to obtain discrete spectra. The acquisition section 411 is a program component that causes the computer 100 to read discrete spectra obtained through FFT calculations and stored in the hard disk unit 115 to obtain the discrete spectra. The acquisition section 411 may include a program component that causes the computer 100 to perform FFT calculations.

The calculation section 412 is a program component that causes the computer 100 to calculate a spectrum value $F_p(\omega)$ at an arbitrary frequency $f = \omega/2\pi$ from acquired discrete spectra in accordance with the formula

[Formula 10]

$$F_p(\omega) = \sum_{k=0}^{N-1} F_p(\omega_0 + k \cdot \Delta\omega) \cdot \Psi(\omega - (\omega_0 + k \cdot \Delta\omega))$$

where
[Formula 11]

$$\Psi(\omega) = \frac{1}{N} \cdot \exp\left(-j\frac{(N-1)\pi \cdot \omega}{N\Delta\omega}\right) \cdot \frac{\sin\left(\frac{\pi \cdot \omega}{\Delta\omega}\right)}{\sin\left(\frac{\pi \cdot \omega}{N \cdot \Delta\omega}\right)}$$

where

ω is an angular frequency of interest,
$F_P(\omega)$ is the spectrum value at the angular frequency ω,
Δω is a distance between discrete spectra,
ωo* is a given reference angular frequency, including ωo = 0, and
Ψ(ω) is an interpolation function.

Alternatively, the calculation section 412 may cause the computer 100 to obtain a spectrum value $F_P(\omega)$ at an arbitrary frequency f = ω/2π from acquired discrete spectra in accordance with the following formula, instead of the formulae given above,
[Formula 12]

$$F_p(\omega) = R_p(0)\cdot\Psi(\omega) + R_p\left(\frac{N}{2}\cdot\Delta\omega\right)\cdot\Psi\left(\omega - \left(\frac{N}{2}\cdot\Delta\omega\right)\right)$$
$$+ \sum_{k=1}^{N/2-1} F_p(k\cdot\Delta\omega)\cdot\Psi(\omega - k\cdot\Delta\omega) + \sum_{k=1}^{N/2-1}\left(F_p(k\cdot\Delta\omega)\right)^*\cdot\Psi(\omega + k\cdot\Delta\omega)$$

where
$R_P(k)$ is the real part of a complex number $F_P(k)$, and
$F_P(k)^*$ is the conjugate complex number of $F_P(k)$.

In addition, the output section 413 is a program component that causes the computer 100 to display the results of calculations performed by the calculation section 412 on the display screen 121 of the image display unit 120 (see Fig. 1) The output section 413 may cause the computer 100 to output the results of calculations to an external device in addition to, or instead of displaying them.

Fig. 4 shows a functional configuration of a spectrum interpolation apparatus according to an embodiment of the present invention.

The spectrum interpolation apparatus 420 shown in Fig. 4 includes an acquisition section 421, a calculation section 422, and an output section 423. The acquisition section 421, calculation section 422, and output section 423 are functions implemented by executing on the computer 100 the acquisition section 411, calculation section 412, and output section 413, respectively, which are the program components of the spectrum interpolation program 410 shown in Fig. 3. Accordingly, the acquisition section 421, calculation section 422, and output section 423 shown in Fig. 4 are composed of the acquisition section 411, calculation section 412, and output section 413, respectively, which are program components, and hardware of the computer 100.

A derivation of the formulae given above will be described below.

1. Introduction

This section briefly describes matters at the starting point regarding fundamentals of interpolation of a discretely sampled periodic spectral function. Expansions of Fourier series will be reviewed from the standpoint of numerically calculating a Fourier series coefficient to derive a sampling theorem for a periodic spectral signal. As a by-product of the derivation, interpolation formulae for periodic spectral functions using sample points will be derived.

2. From integral representation of Fourier series coefficient to sample point Fourier transform formulae

Here, the periodic spectral function with a period $2\pi/\omega_s$ is denoted by $F_P(\omega)$. That is,
[Formula 13]

$$F_p(\omega) = F_p(\omega \pm l\omega_s) \tag{2.1}$$

Since $F_P(\omega)$ is a periodic signal, Fourier series expansion of the signal is possible and is represented as
[Formula 14]

$$F_p(\omega) = \sum_{n=-\infty}^{+\infty} d_n \cdot \exp\left(-j\frac{2\pi \cdot n}{\omega_s}\omega\right) \qquad (2.2)$$

[Formula 15]

$$d_n = \frac{1}{\omega_s} \cdot \oint_{\omega_s} F_p(\omega) \cdot \exp\left(+j\frac{2\pi \cdot n}{\omega_s}\omega\right) \cdot d\omega \qquad (2.3)$$

Here, the integral sign in Formula (2.3) represents an integral over one period. When attempting to obtain (approximately at least) the integral through a numerical calculation, the first to come to mind may be the formula
[Formula 16]

$$d_n \cong \frac{\Delta\omega}{\omega_s} \cdot \sum_{k=0}^{N-1} F_p(\omega_0 + k \cdot \Delta\omega) \cdot \exp\left(+j\frac{2\pi \cdot n}{\omega_s} \cdot (\omega_0 + k \cdot \Delta\omega)\right)$$

$$= \frac{1}{N} \cdot \sum_{k=0}^{N-1} F_p(\omega_0 + k \cdot \Delta\omega) \cdot \exp\left(+j\frac{2\pi k n}{N}\right) \cdot \exp\left(+j\frac{2\pi \cdot n\omega_0}{N \cdot \Delta\omega}\right) \qquad (2.4)$$

where
[Formula 17]

$$\omega_s = N \cdot \Delta\omega \qquad (2.5)$$

Here, $\omega_0$ is a given reference angular frequency, which may be zero. From Formula (2.4), the following formula can be written.
[Formula 18]

$$d_n^{(D)} = \frac{1}{N} \cdot \sum_{k=0}^{N-1} F_p(\omega_0 + k \cdot \Delta\omega) \cdot \exp\left(+j\frac{2\pi k n}{N}\right) \qquad (2.6)$$

Here, $d_n^{(D)}$ has the following periodicity:
[Formula 19]

$$d_n^{(D)} = d_{n+lN}^{(D)} \qquad (2.7)$$

From Formula (2.6), $F_P(\omega_0 + k \cdot \Delta\omega)$ is represented with $d_n^{(D)}$ by using the formula

[Formula 20]

$$\frac{1}{N}\sum_{n=0}^{N-1}\exp\left(-j\frac{2\pi(l-k)n}{N}\right)=\frac{1}{N}\cdot\frac{1-\exp(-j2\pi(l-k))}{1-\exp(-j2\pi(l-k)/N)}$$

$$=\exp(-j\pi(l-k))\exp\left(-j\frac{\pi(l-k)}{N}\right)\cdot\frac{\sin(\pi(l-k))}{\pi(l-k)}\cdot\frac{\pi(l-k)/N}{\sin(\pi(l-k)/N)}=\delta_{l-k,mN}$$

$$(2.8)$$

That is, the Formula (2.6) is multiplied by exp (- j2$\pi$· n1/N), the sum of the values from 0 to (N - 1) for n is calculated, and Formula (2.8) is used to obtain
[Formula 21]

$$F_p(\omega_0+l\cdot\Delta\omega)=\sum_{n=0}^{N-1}d_n^{(D)}\cdot\exp\left(-j\frac{2\pi\cdot nl}{N}\right)$$

$$(2.9)$$

On the other hand, by making the following substitutions into Formula (2.2)
[Formula 22]

$$\omega=\omega_0+l\cdot\Delta\omega \qquad\qquad (2.10)$$

$$n=n_0+mN \qquad\qquad (2.11)$$

and using $\omega_s = N \cdot \Delta\omega$ in Formula (2.5) to obtain
[Formula 23]

$$F_p(\omega_0+l\cdot\Delta\omega)=\sum_{n_0=0}^{N-1}\sum_{m=-\infty}^{+\infty}d_{n_0+mN}\cdot\exp\left(-j\frac{2\pi\cdot(n_0+mN)\cdot(\omega_0+l\cdot\Delta\omega)}{\omega_s}\right)$$

$$=\sum_{n_0=0}^{N-1}\left\{\sum_{m=-\infty}^{+\infty}d_{n_0+mN}\cdot\exp\left(-j\frac{2\pi\cdot(n_0+mN)\omega_0}{\omega_s}\right)\right\}\exp\left(-j\frac{2\pi n_0 l}{N}\right) \qquad (2.12)$$

By comparing Formulae (2.9) and (2.12),
[Formula 24]

$$d_n^{(D)}=\sum_{m=-\infty}^{+\infty}d_{n+mN}\cdot\exp\left(-j\frac{2\pi\cdot(n+mN)\cdot\omega_0}{\omega_s}\right) \qquad\qquad (2.13)$$

is obtained. It is evident from Formula (2.13) that the periodicity of Formula (2.7) holds.

3. Sampling theorem for periodic spectra

First, from Formula (2.13),
[Formula 25]

$$d_n^{(D)} = \sum_{m=-\infty}^{+\infty} d_{n+mN} \cdot \exp\left(-j\frac{2\pi \cdot (n+mN) \cdot \omega_0}{\omega_s}\right) \qquad (3.1)$$

Here, consider a signal that is localized in time as follows.
[Formula 26]

$$d_n = 0 \quad \text{for} \quad n \leq -1 \quad \text{or} \quad n \geq N \qquad (3.2)$$

In this case, the following holds
[Formula 27]

$$d_n^{(D)} = d_n \cdot \exp\left(-j\frac{2\pi \cdot n\omega_0}{\omega_s}\right) \qquad \text{for} \quad 0 \leq n \leq (N-1) \qquad (3.3)$$

From Formulae (2.2), (3.2), and (3.3),
[Formula 28]

$$F_p(\omega) = \sum_{n=-\infty}^{+\infty} d_n \cdot \exp\left(-j\frac{2\pi \cdot n}{\omega_s}\omega\right) = \sum_{n=0}^{N-1} d_n \cdot \exp\left(-j\frac{2\pi \cdot n}{\omega_s}\omega\right)$$

$$= \sum_{n=0}^{N-1} d_n^{(D)} \cdot \exp\left(+j\frac{2\pi \cdot n\omega_0}{N \cdot \Delta\omega} - j\frac{2\pi \cdot n}{N \cdot \Delta\omega}\omega\right) \qquad (3.4)$$

By using Formula (2.6)
[Formula 29]

$$d_n^{(D)} = \frac{1}{N} \cdot \sum_{k=0}^{N-1} F_p(\omega_0 + k \cdot \Delta\omega) \cdot \exp\left(+j\frac{2\pi kn}{N}\right)$$

to obtain
[Formula 30]

$$F_p(\omega) = \sum_{k=0}^{N-1} F_p(\omega_0 + k \cdot \Delta\omega) \left\{ \frac{1}{N} \sum_{n=0}^{N-1} \exp\left(-j \frac{2\pi \cdot n}{N \cdot \Delta\omega} (\omega - \omega_0 - k \cdot \Delta\omega)\right) \right\} \quad (3.5)$$

By substituting
[Formula 31]

$$\Psi(\omega) = \frac{1}{N} \sum_{n=0}^{N-1} \exp\left(-j \frac{2\pi \cdot n}{N \cdot \Delta\omega} \omega\right) \quad (3.6)$$

Formula (3.5) can be rewritten as
[Formula 32]

$$F_p(\omega) = \sum_{k=0}^{N-1} F_p(\omega_0 + k \cdot \Delta\omega) \cdot \Psi(\omega - (\omega_0 + k \cdot \Delta\omega)) \quad (3.7)$$

This formula (3.7) is one of the interpolation formulae of the present invention.
By substituting $\omega = \omega_0 + 1 . \Delta\omega$ in Formula (3.7),
[Formula 33]

$$F_p(\omega_0 + l \cdot \Delta\omega) = \sum_{k=0}^{N-1} F_p(\omega_0 + k \cdot \Delta\omega) \cdot \Psi((l-k) \cdot \Delta\omega) \quad (3.8)$$

can be obtained. Accordingly, taking the periodicity of $F_P(\omega)$ represented by formulae (2.1) and (2.5) into consideration, the property
[Formula 34]

$$\Psi((l-k) \cdot \Delta\omega) = \delta_{l-k, \pm mN} = \delta_{l, k \pm mN} = \delta_{k, l \pm mN} \quad (3.9)$$

is required. Here, note that
[Formula 35]

$$S = a_0 \sum_{k=0}^{K} r^k \quad , \quad rS = a_0 \sum_{k=1}^{K+1} r^k \quad , \quad S = a_0 \frac{1 - r^{K+1}}{1 - r} \quad (3.10)$$

then, $\psi(\omega)$ in Formula a (3.6) is given by
[Formula 36]

$$\Psi(\omega) = \frac{1}{N} \cdot \frac{1 - \exp\left(-j\dfrac{2\pi \cdot \omega}{\Delta\omega}\right)}{1 - \exp\left(-j\dfrac{2\pi \cdot \omega}{N \cdot \Delta\omega}\right)} = \frac{1}{N} \cdot \frac{\exp\left(-j\dfrac{\pi \cdot \omega}{\Delta\omega}\right)}{\exp\left(-j\dfrac{\pi \cdot \omega}{N \cdot \Delta\omega}\right)} \cdot \frac{\sin\left(\dfrac{\pi \cdot \omega}{\Delta\omega}\right)}{\sin\left(\dfrac{\pi \cdot \omega}{N \cdot \Delta\omega}\right)}$$

$$= \frac{1}{N} \cdot \exp\left(-j\frac{(N-1)\pi \cdot \omega}{N\Delta\omega}\right) \cdot \frac{\sin\left(\dfrac{\pi \cdot \omega}{\Delta\omega}\right)}{\sin\left(\dfrac{\pi \cdot \omega}{N \cdot \Delta\omega}\right)} \tag{3. 11}$$

This formula (3.11) is the interpolation function used in Formula (3.7).

By substituting $\omega$ with $\omega + mN \cdot \Delta\omega = \omega + m\omega_s$ in Formula (3.11),

[Formula 37]

$$\Psi(\omega + mN \cdot \Delta\omega) = \frac{1}{N} \cdot \exp\left(-j\frac{(N-1)\pi \cdot (\omega + mN \cdot \Delta\omega)}{N \cdot \Delta\omega}\right) \cdot \frac{\sin\left(\dfrac{\pi \cdot (\omega + mN \cdot \Delta\omega)}{\Delta\omega}\right)}{\sin\left(\dfrac{\pi \cdot (\omega + mN \cdot \Delta\omega)}{N \cdot \Delta\omega}\right)}$$

$$= \frac{1}{N} \cdot \exp\left(-j\frac{(N-1)\pi \cdot \omega}{N \cdot \Delta\omega}\right) \cdot \exp\left(-j(N-1)m\pi\right) \cdot \frac{\sin\left(\dfrac{\pi\omega}{\Delta\omega}\right)\cos(mN\pi)}{\sin\left(\dfrac{\pi\omega}{N \cdot \Delta\omega}\right)\cos(m\pi)}$$

$$= \frac{1}{N} \cdot \exp\left(-j\frac{(N-1)\pi \cdot \omega}{N \cdot \Delta\omega}\right) \cdot \frac{\sin\left(\dfrac{\pi\omega}{\Delta\omega}\right)}{\sin\left(\dfrac{\pi\omega}{N \cdot \Delta\omega}\right)} = \Psi(\omega) \tag{3. 12}$$

is obtained. Therefore, $\psi(\omega)$ is a periodic function of $N \cdot \Delta\omega = \omega_s$.

The function $\Psi(\omega)$ must satisfy $\Psi(k \cdot \Delta\omega) = \delta_{k, mN}$ in Formula (3.9). That is, it must satisfy

[Formula 38]

$$\delta_{k, mN} = \frac{1}{N} \cdot \exp\left(-j\frac{(N-1)\pi \cdot k \cdot \Delta\omega}{N \cdot \Delta\omega}\right) \cdot \frac{\sin\left(\dfrac{\pi \cdot k \cdot \Delta\omega}{\Delta\omega}\right)}{\sin\left(\dfrac{\pi \cdot k \cdot \Delta\omega}{N \cdot \Delta\omega}\right)}$$

$$= \frac{1}{N} \cdot \exp\left(-j\frac{(N-1)\pi \cdot k}{N}\right) \cdot \frac{\sin(\pi \cdot k)}{\sin\left(\dfrac{\pi \cdot k}{N}\right)} \tag{3. 13}$$

If $k \neq mN$, the right side of Formula (3.13) is obviously zero. On the other hand, if $k = mN$, then

[Formula 39]

$$\Psi(mN \cdot \Delta\omega) = \frac{1}{N} \cdot \exp\left(-jm(N-1)\pi\right) \cdot \frac{\cos(mN\pi)}{\cos(m\pi)} \cdot N = 1 \tag{3. 14}$$

13

Thus, it can be seen that Formula (3.13) and therefore Formula (3.9) hold.

It can be readily shown that the following properties of $\psi(\omega)$ hold.

(1) Periodicity
[Formula 40]

$$\Psi(\omega + mN \cdot \Delta\omega) = \Psi(\omega) \qquad (3.15)$$

(2) The value when $\omega = mN \cdot \Delta\omega$ and $\omega = k \cdot \Delta\omega$ (where k = 0, 1, 2, ..., (N - 1)) is
[Formula 41]

$$\Psi(k \cdot \Delta\omega) = \delta_{k,mN} \qquad (3.16)$$

In the following description, the following substitution is used.
[Formula 42]

$$\Psi(\omega) = \frac{1}{N} \cdot \exp\left(-j\frac{(N-1)\pi \cdot \omega}{N \cdot \Delta\omega}\right) \cdot \frac{\sin\left(\frac{\pi \cdot \omega}{\Delta\omega}\right)}{\sin\left(\frac{\pi \cdot \omega}{N \cdot \Delta\omega}\right)} = \Psi^{(r)}(\omega) + j\Psi^{(i)}(\omega) \qquad (3.17)$$

Here,
[Formula 43]

$$\Psi^{(r)}(\omega) = \frac{1}{N} \cdot \cos\left(\frac{(N-1)\pi \cdot \omega}{N \cdot \Delta\omega}\right) \cdot \frac{\sin\left(\frac{\pi \cdot \omega}{\Delta\omega}\right)}{\sin\left(\frac{\pi \cdot \omega}{N \cdot \Delta\omega}\right)} \qquad (3.18)$$

and
[Formula 44]

$$\Psi^{(i)}(\omega) = -\frac{1}{N} \cdot \sin\left(\frac{(N-1)\pi \cdot \omega}{N \cdot \Delta\omega}\right) \cdot \frac{\sin\left(\frac{\pi \cdot \omega}{\Delta\omega}\right)}{\sin\left(\frac{\pi \cdot \omega}{N \cdot \Delta\omega}\right)} \qquad (3.19)$$

Then, the following can be shown.

(3) Values when $\omega = (N/2) \cdot \Delta\omega$ and symmetry about $\omega = (N/2) \cdot \Delta\omega$

First, values when $\omega = (N/2) \cdot \Delta\omega$ are determined. When N is an even number,
[Formula 45]

$$\Psi^{(r)}\left(\frac{N}{2}\Delta\omega\right) = \frac{1}{N}\cdot\cos\left(\frac{(N-1)\pi}{2}\right)\cdot\frac{\sin\left(\frac{N\pi}{2}\right)}{\sin\left(\frac{\pi}{2}\right)} = 0 \qquad (3.\ 20)$$

[Formula 46]

$$\Psi^{(i)}\left(\frac{N}{2}\Delta\omega\right) = -\frac{1}{N}\cdot\sin\left(\frac{(N-1)\pi}{2}\right)\cdot\frac{\sin\left(\frac{N\pi}{2}\right)}{\sin\left(\frac{\pi}{2}\right)} = 0 \qquad (3.\ 21)$$

The symmetry about $\omega = (N/2)\cdot\Delta\omega$ will be considered next. For the real part, the following symmetry about $\omega = (N/2)\cdot\Delta\omega$ can be shown.
[Formula 47]

$$\Psi^{(r)}\left(\frac{N}{2}\Delta\omega + \Omega\right) = \Psi^{(r)}\left(\frac{N}{2}\Delta\omega - \Omega\right) \qquad (3.\ 22)$$

For the imaginary part, the following skew symmetry about $\omega = (N/2)\cdot\Delta\omega$ can be shown.
[Formula 48]

$$\Psi^{(i)}\left(\frac{N}{2}\Delta\omega + \Omega\right) = -\Psi^{(i)}\left(\frac{N}{2}\Delta\omega - \Omega\right) \qquad (3.\ 24)$$

(4) The symmetry about $\omega = (N/2)\cdot\Delta\omega$ when N is an odd number

[0066]    For the real part, the following symmetry about $\omega = (N/2)\cdot\Delta\omega$ can be shown.
[Formula 49]

$$\Psi^{(r)}\left(\frac{N}{2}\Delta\omega + \Omega\right) = \Psi^{(r)}\left(\frac{N}{2}\Delta\omega - \Omega\right) \qquad (3.\ 25)$$

For the imaginary part, the following skew symmetry about $\omega = (N/2)\cdot\Delta\omega$ can be shown, as in the case where N is an even number.
[Formula 50]

$$\Psi^{(i)}\left(\frac{N}{2}\Delta\omega + \Omega\right) = -\Psi^{(i)}\left(\frac{N}{2}\Delta\omega - \Omega\right) \qquad (3.\ 26)$$

4. Interpolation formulae with taking into consideration the symmetry of spectra

The discussion so far has been made in general terms. When the original time signal is a real signal, the range of values to be added up can be reduced to half by using the fact that the real part of a spectrum is an even number and the imaginary part is an odd number. This will be described below. First, in the following formula,
[Formula 51]

$$F_p(k) = R_p(k) + jX_p(k) = \frac{1}{N}\sum_{n=0}^{N-1} f_p(n) \cdot \exp\left(-j\frac{2\pi kn}{N}\right) \qquad (4.1)$$

if the time signal is a real signal,
[Formula 52]

$$R_p(k) = \frac{1}{N}\sum_{n=0}^{N-1} f_p(n) \cdot \cos\left(\frac{2\pi kn}{N}\right) \qquad (4.2)$$

[Formula 53]

$$X_p(k) = -\frac{1}{N}\sum_{n=0}^{N-1} f_p(n) \cdot \sin\left(\frac{2\pi kn}{N}\right) \qquad (4.3)$$

the following formulae hold.
[Formula 54]

$$R_p(N-k) = \frac{1}{N}\sum_{n=0}^{N-1} f_p(n) \cdot \cos\left(\frac{2\pi(N-k)n}{N}\right)$$
$$= \frac{1}{N}\sum_{n=0}^{N-1} f_p(n) \cdot \cos\left(-\frac{2\pi kn}{N}\right) = R_p(k) \qquad (4.4)$$

[Formula 55]

$$X_p(N-k) = -\frac{1}{N}\sum_{n=0}^{N-1} f_p(n) \cdot \sin\left(\frac{2\pi(N-k)n}{N}\right)$$
$$= -\frac{1}{N}\sum_{n=0}^{N-1} f_p(n) \cdot \sin\left(-\frac{2\pi kn}{N}\right) = -X_p(k) \qquad (4.5)$$

[Formula a 56]

$$X_p\left(\frac{N}{2}\right) = \frac{1}{N}\sum_{n=0}^{N-1} f_p(n)\cdot\cos(\pi n) - j\frac{1}{N}\sum_{n=0}^{N-1} f_p(n)\cdot\sin(\pi n)$$

$$= \frac{1}{N}\sum_{n=0}^{N-1} f_p(n)\cdot\cos(\pi n) = R_p\left(\frac{N}{2}\right) \tag{4.6}$$

If ωo = 0 in interpolation Formula (3.8)
[Formula 57]

$$F_p(\omega) = \sum_{k=0}^{N-1} F_p(\omega_0 + k\cdot\Delta\omega)\cdot\Psi(\omega - (\omega_0 + k\cdot\Delta\omega)) \tag{(3.8)}$$

then Formula (3.8) can be rewritten as
[Formula 58]

$$F_p(\omega) = \sum_{k=0}^{N-1} F_p(k\cdot\Delta\omega)\cdot\Psi(\omega - k\cdot\Delta\omega) \tag{4.7}$$

Taking into consideration Formulae (4.4) through (4.6), Formula (4.7) can be rewritten as
[Formula 59]

$$F_p(\omega) = R_p(0)\cdot\Psi(\omega) + R_p\left(\frac{N}{2}\cdot\Delta\omega\right)\cdot\Psi\left(\omega - \left(\frac{N}{2}\cdot\Delta\omega\right)\right)$$

$$+ \sum_{k=1}^{N/2-1} F_p(k\cdot\Delta\omega)\cdot\Psi(\omega - k\cdot\Delta\omega) + \sum_{l=N/2+1}^{N-1} F_p(l\cdot\Delta\omega)\cdot\Psi(\omega - l\cdot\Delta\omega)$$

$$= R_p(0)\cdot\Psi(\omega) + R_p\left(\frac{N}{2}\cdot\Delta\omega\right)\cdot\Psi\left(\omega - \left(\frac{N}{2}\cdot\Delta\omega\right)\right)$$

$$+ \sum_{k=1}^{N/2-1} F_p(k\cdot\Delta\omega)\cdot\Psi(\omega - k\cdot\Delta\omega)$$

$$+ \sum_{k=1}^{N/2-1} F_p((N-k)\cdot\Delta\omega)\cdot\Psi(\omega - ((N-k)\cdot\Delta\omega))$$

$$= R_p(0)\cdot\Psi(\omega) + R_p\left(\frac{N}{2}\cdot\Delta\omega\right)\cdot\Psi\left(\omega - \left(\frac{N}{2}\cdot\Delta\omega\right)\right)$$

$$+ \sum_{k=1}^{N/2-1} R_p(k\cdot\Delta\omega)\cdot\{\Psi(\omega - k\cdot\Delta\omega) + \Psi(\omega - ((N-k)\cdot\Delta\omega))\}$$

$$+ j\sum_{k=1}^{N/2-1} X_p(k\cdot\Delta\omega)\cdot\{\Psi(\omega - k\cdot\Delta\omega) - \Psi(\omega - ((N-k)\cdot\Delta\omega))\}$$

$$= R_p(0)\cdot\Psi(\omega) + R_p\left(\frac{N}{2}\cdot\Delta\omega\right)\cdot\Psi\left(\omega - \left(\frac{N}{2}\cdot\Delta\omega\right)\right)$$

$$+ \sum_{k=1}^{N/2-1} F_p(k\cdot\Delta\omega)\cdot\Psi(\omega - k\cdot\Delta\omega) + \sum_{k=1}^{N/2-1} (F_p(k\cdot\Delta\omega))^*\cdot\Psi(\omega - ((N-k)\cdot\Delta\omega))$$

$$(4.8)$$

From formulae (3.18) and (3.19)
[Formula 60]

$$\Psi^{(r)}(\omega) = \frac{1}{N}\cdot\cos\left(\frac{(N-1)\pi\cdot\omega}{N\cdot\Delta\omega}\right)\cdot\frac{\sin\left(\frac{\pi\cdot\omega}{\Delta\omega}\right)}{\sin\left(\frac{\pi\cdot\omega}{N\cdot\Delta\omega}\right)}$$

$$((3.18))$$

[Formula 61]

$$\Psi^{(i)}(\omega) = -\frac{1}{N}\cdot\sin\left(\frac{(N-1)\pi\cdot\omega}{N\cdot\Delta\omega}\right)\cdot\frac{\sin\left(\frac{\pi\cdot\omega}{\Delta\omega}\right)}{\sin\left(\frac{\pi\cdot\omega}{N\cdot\Delta\omega}\right)}$$

$$((3.19))$$

the following formulae are derived.
[Formula 62]

$$\Psi^{(r)}(\omega - (N-k)\Delta\omega)$$

$$= \frac{1}{N} \cdot \cos\left(\frac{(N-1)\pi \cdot (\omega - (N-k)\Delta\omega)}{N \cdot \Delta\omega}\right) \cdot \frac{\sin\left(\frac{\pi \cdot (\omega - (N-k)\Delta\omega)}{\Delta\omega}\right)}{\sin\left(\frac{\pi \cdot (\omega - (N-k)\Delta\omega)}{N \cdot \Delta\omega}\right)}$$

$$= \frac{1}{N} \cdot \cos\left(\frac{(N-1)\pi \cdot (\omega + k\Delta\omega)}{N \cdot \Delta\omega}\right) \cdot \frac{\sin\left(\frac{\pi \cdot (\omega + k\Delta\omega)}{\Delta\omega}\right)}{\sin\left(\frac{\pi \cdot (\omega + k\Delta\omega)}{N \cdot \Delta\omega}\right)} = \Psi^{(r)}(\omega + k\Delta\omega) \qquad (4.\,9)$$

[Formula 63]

$$\Psi^{(i)}(\omega - (N-k)\Delta\omega)$$

$$= -\frac{1}{N} \cdot \sin\left(\frac{(N-1)\pi \cdot (\omega - (N-k)\Delta\omega)}{N \cdot \Delta\omega}\right) \cdot \frac{\sin\left(\frac{\pi \cdot (\omega - (N-k)\Delta\omega)}{\Delta\omega}\right)}{\sin\left(\frac{\pi \cdot (\omega - (N-k)\Delta\omega)}{N \cdot \Delta\omega}\right)}$$

$$= -\frac{1}{N} \cdot \sin\left(\frac{(N-1)\pi \cdot (\omega + k\Delta\omega)}{N \cdot \Delta\omega}\right) \cdot \frac{\sin\left(\frac{\pi \cdot (\omega + k\Delta\omega)}{\Delta\omega}\right)}{\sin\left(\frac{\pi \cdot (\omega + k\Delta\omega)}{N \cdot \Delta\omega}\right)} = \Psi^{(i)}(\omega + k\Delta\omega) \qquad (4.\,10)$$

Therefore,
[Formula 64]

$$\Psi(\omega - (N-k)\Delta\omega) = \Psi(\omega + k\Delta\omega) \qquad (4.\,11)$$

Thus, the interpolation formula
[Formula 65]

$$F_p(\omega) = R_p(0) \cdot \Psi(\omega) + R_p\left(\frac{N}{2} \cdot \Delta\omega\right) \cdot \Psi\left(\omega - \left(\frac{N}{2} \cdot \Delta\omega\right)\right)$$

$$+ \sum_{k=1}^{N/2-1} R_p(k \cdot \Delta\omega) \cdot \{\Psi(\omega - k \cdot \Delta\omega) + \Psi(\omega + k \cdot \Delta\omega)\}$$

$$+ j \sum_{k=1}^{N/2-1} X_p(k \cdot \Delta\omega) \cdot \{\Psi(\omega - k \cdot \Delta\omega) - \Psi(\omega + k \cdot \Delta\omega)\}$$

$$= R_p(0) \cdot \Psi(\omega) + R_p\left(\frac{N}{2} \cdot \Delta\omega\right) \cdot \Psi\left(\omega - \left(\frac{N}{2} \cdot \Delta\omega\right)\right)$$

$$+ \sum_{k=1}^{N/2-1} F_p(k \cdot \Delta\omega) \cdot \Psi(\omega - k \cdot \Delta\omega) + \sum_{k=1}^{N/2-1} (F_p(k \cdot \Delta\omega))^* \cdot \Psi(\omega + k \cdot \Delta\omega) \qquad (4.\,12)$$

can be obtained.

Formula (4.12) is another interpolation formula used in the present invention.

The result of a simulation using an interpolation formula in the present invention will be described below.

Spectral interpolation and a demonstrative example of it will be summarized here.

5. Overview of principle of spectral interpolation

The principle of spectrum interpolation is based on a sampling theorem for a periodic function. The process for deriving formulae and details of interpolation functions are as described above. The interpolation formula is given as

[Formula 66]

$$F_p(\omega) = \sum_{k=0}^{N-1} F_p(\omega_0 + k \cdot \Delta\omega) \cdot \Psi(\omega - (\omega_0 + k \cdot \Delta\omega)) \qquad (5.1)$$

where $\omega$ is an angular frequency of interest to be obtained, $F_P(\omega)$ is a complex spectrum to be obtained, $F_P(\omega O + k\Delta\omega)$ is complex spectrum data at a discrete angular frequency obtained using FFT, and $\omega o$ is a given reference angular frequency, which may be zero, and $\Psi(\omega)$ is an interpolation function. That is, a complex spectrum at a desired frequency can be obtained without an error when N complex spectra $F_P(\omega O + k\Delta\omega)$ obtained by using FFT are provided. Because formula (5.1) is in the form of convolution, a fast algorithm using FFT is possible if interpolation at a number of uniformly spaced points of a power of 2 is desired. However, (5.1) is advantageous in that the formula can be used in a case where the value at a single point is to be obtained.

Because the principle is based on a sampling theorem for a periodic signal, the following conditions must be satisfied.

(1) The signal is a time signal that starts with zero and ends with zero.
Impulse responses and time signals windowed with a Hanning window will satisfy the condition.
(2) All spectra obtained using FFT are used for interpolation calculation.

Spectral interpolation without an error is possible if the two conditions are satisfied.

6. Example of numerical calculation

6.1 Spectra of damping oscillation

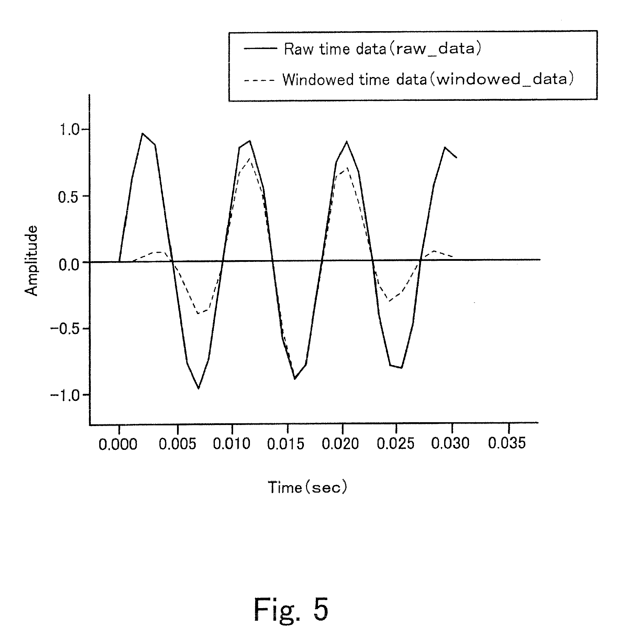

The first example is damping oscillation waveform spectra as shown in Fig. 5.

In Fig. 5, the solid curve represents raw time data and the dashed curve represents time data windowed with a Hanning window.

A damping sine wave given by
[Formula 67]

$$f(t) = e^{-2\pi f_0 \zeta t} \sin(2\pi f_0 t) \qquad (6.1.1)$$

is used. In this example, analysis is performed using fo =100 (Hz), $\zeta$ = 0.008, N = 32, and $f_{max}$ = 512 (Hz).

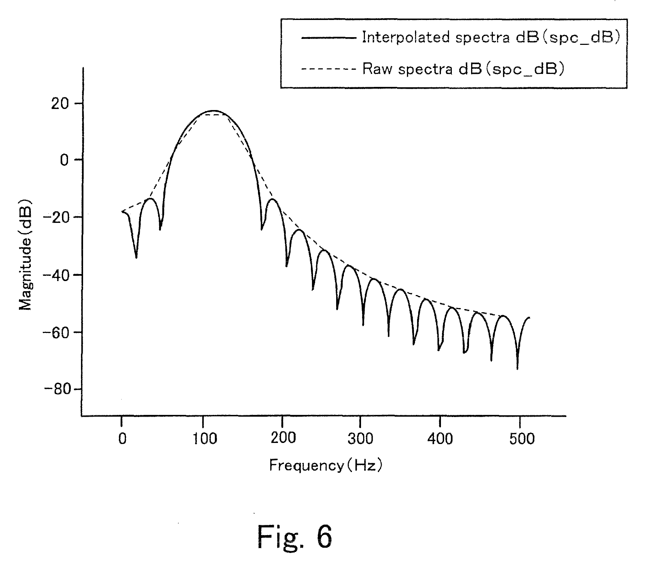

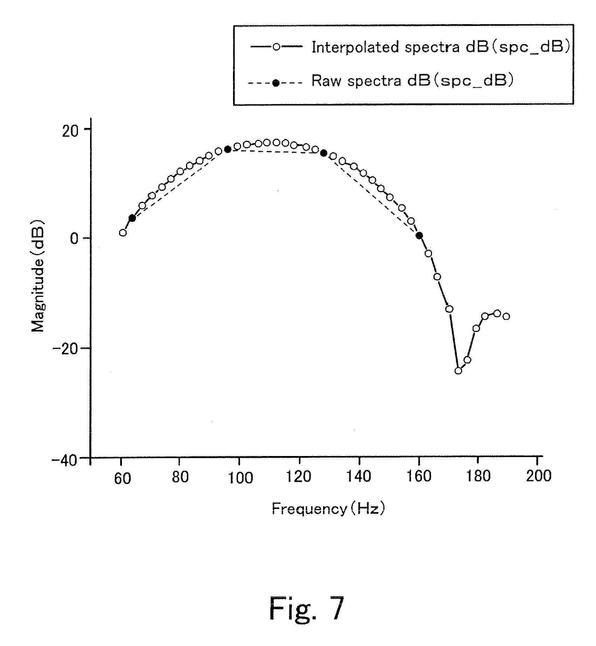

Fig. 6 shows the spectra of the data windowed with the Hanning window shown in Fig. 5 and Fig. 7 shows an enlarged view of a portion of the data shown in Fig. 6.

The dashed curve represents discrete spectra obtained using FFT calculation and is a line plot in which discrete spectra are connected by line segments. The solid curve represents spectrum values obtained from the discrete spectra represented by the line plot by using interpolation formula (6.1). It can be seen from these graphs that the spectrum value at each frequency between discrete points can be very accurately obtained.

7.2. Spectra of beat

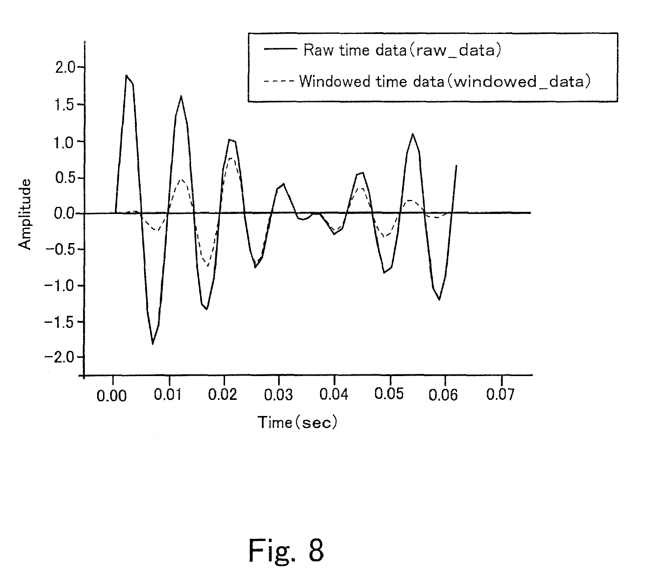

The next example is beat waveform spectra as shown in Fig. 8.
In Fig. 8, the solid curve represents raw time data and the dashed curve represents time data windowed with a Hanning window.
A damping sine wave given by
[Formula 68]

$$f(t) = e^{-2\pi f_1 \zeta t} \sin(2\pi f_1 t) + e^{-2\pi f_2 \zeta t} \sin(2\pi f_2 t) \qquad (6.2.1)$$

is used. In this example, analysis is performed using $f_1 = 100$ (Hz), $f_1 = 114$ (Hz), $\zeta = 0.008$, $N = 64$, and $f_{max} = 512$ (Hz).

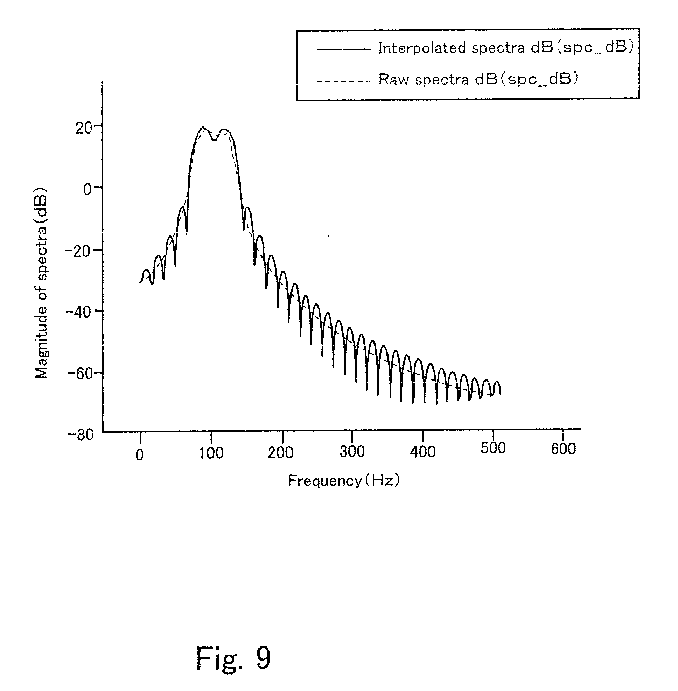

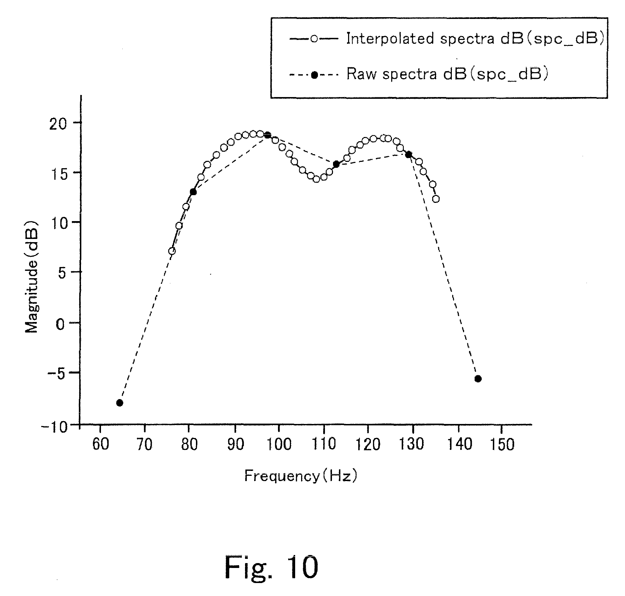

Fig. 9 shows spectra of the data windowed with the Hanning window shown in Fig. 8 and Fig. 10 is an enlarged view of a portion of the graph shown in Fig. 9.
Because beat is treated in this example, two peaks of the spectra will appear. It can be that the interpolation formula used in the present invention enables the peaks, which are obscure in discrete spectra obtained using FFT, to clearly appear with high precision.
It can be seen from these drawings that the interpolated data at the original data points coincides with the original data and passes through the other points at which probable true values appear.
A general purpose computer and the spectrum interpolation program executed on the computer are used to implement a spectrum interpolation apparatus in the embodiments described above. However, the spectrum interpolation apparatus of the present invention may be implemented as a dedicated apparatus, instead of using a general purpose computer, or may be implemented by using a general purpose computer and another apparatus such as a spectrum analyzer, or may be implemented as a measuring instrument.

**Claims**

1. A spectrum interpolation method for obtaining a spectrum value at an arbitrary frequency by interpolating discrete spectra obtained through sampling one period of a periodic function at N sampling points to perform a Fourier transform, wherein the spectrum value $F_P(\omega)$ at the arbitrary frequency $f = \omega/2\pi$ is obtained in accordance with the following formula or any of formulae equivalent to the following formula
[Formula 1]

$$F_p(\omega) = \sum_{k=0}^{N-1} F_p(\omega_0 + k \cdot \Delta\omega) \cdot \Psi(\omega - (\omega_0 + k \cdot \Delta\omega))$$

where
[Formula 2]

$$\Psi(\omega) = \frac{1}{N} \cdot \exp\left(-j \frac{(N-1)\pi \cdot \omega}{N\Delta\omega}\right) \cdot \frac{\sin\left(\dfrac{\pi \cdot \omega}{\Delta\omega}\right)}{\sin\left(\dfrac{\pi \cdot \omega}{N \cdot \Delta\omega}\right)}$$

where
$\omega$ is an angular frequency of interest,
$F_P(\omega)$ is the spectrum value at the angular frequency $\omega$,
$\Delta\omega$ is a distance between discrete spectra,

$\omega$o is an arbitrary reference angular frequency, including $\omega$o = 0, and
$\Psi(\omega)$ is an interpolation function.

2. The spectrum interpolation method according to claim 1, wherein the equivalent formulae include
   [Formula 3]

$$F_p(\omega) = R_p(0) \cdot \Psi(\omega) + R_p\left(\frac{N}{2} \cdot \Delta\omega\right) \cdot \Psi\left(\omega - \left(\frac{N}{2} \cdot \Delta\omega\right)\right)$$
$$+ \sum_{k=1}^{N/2-1} F_p(k \cdot \Delta\omega) \cdot \Psi(\omega - k \cdot \Delta\omega) + \sum_{k=1}^{N/2-1} \left(F_p(k \cdot \Delta\omega)\right)^* \cdot \Psi(\omega + k \cdot \Delta\omega)$$

where
$R_P(k)$ is the real part of a complex number $F_P(k)$, and $F_P(k)^*$ is the conjugate complex number of $F_P(k)$.

3. A spectrum interpolation apparatus that obtains a spectrum value at an arbitrary frequency by interpolating discrete spectra obtained through sampling one period of a periodic function at N sampling points to perform a Fourier transform, the spectrum interpolation apparatus comprising:

   an acquisition section that obtains the discrete spectra;
   a calculation section that obtains the spectrum value $F_P(\omega)$ at the arbitrary frequency $f = \omega/2\pi$ in accordance with the following formula or any of formulae equivalent to the following formula
   [Formula 4]

$$F_p(\omega) = \sum_{k=0}^{N-1} F_p(\omega_0 + k \cdot \Delta\omega) \cdot \Psi(\omega - (\omega_0 + k \cdot \Delta\omega))$$

   where
   [Formula 5]

$$\Psi(\omega) = \frac{1}{N} \cdot \exp\left(-j\frac{(N-1)\pi \cdot \omega}{N\Delta\omega}\right) \cdot \frac{\sin\left(\frac{\pi \cdot \omega}{\Delta\omega}\right)}{\sin\left(\frac{\pi \cdot \omega}{N \cdot \Delta\omega}\right)}$$

   where
   $\omega$ is an angular frequency of interest,
   $F_P(\omega)$ is the spectrum value at the angular frequency $\omega$,
   $\Delta\omega$ is a distance between discrete spectra,
   $\omega$o is an arbitrary reference angular frequency, including $\omega$o = 0, and
   $\Psi(\omega)$ is an interpolation function; and
   an output section which outputs the spectrum value $F_p(\omega)$ obtained by the calculation section.

4. The spectrum interpolation apparatus according to claim 3, wherein the calculation section obtains the spectrum value $F_P(\omega)$ at the arbitrary frequency $f = \omega/2\pi$ in accordance with the following formula
   [Formula 6]

$$F_p(\omega) = R_p(0) \cdot \Psi(\omega) + R_p\left(\frac{N}{2} \cdot \Delta\omega\right) \cdot \Psi\left(\omega - \left(\frac{N}{2} \cdot \Delta\omega\right)\right)$$
$$+ \sum_{k=1}^{N/2-1} F_p(k \cdot \Delta\omega) \cdot \Psi(\omega - k \cdot \Delta\omega) + \sum_{k=1}^{N/2-1} \left(F_p(k \cdot \Delta\omega)\right)^* \cdot \Psi(\omega + k \cdot \Delta\omega)$$

which is one of the equivalent formulae,
where
$R_P(k)$ is the real part of a complex number $F_P(k)$, and
$F_P(k)^*$ is the conjugate complex number of $F_P(k)$.

**5.** A spectrum interpolation program storage medium storing a spectrum interpolation program that is executed in a program executing information processing device and causes the information processing device to function as a spectrum interpolation apparatus that obtains a spectrum value at an arbitrary frequency by interpolating discrete spectra obtained through sampling one period of a periodic function at N sampling points to perform a Fourier transform, the spectrum interpolation apparatus comprising:

an acquisition section which obtains the discrete spectra;
a calculation section which obtains the spectrum value $F_P(\omega)$ at the arbitrary frequency $f = \omega/2\pi$ in accordance with the following formula or any of formulae equivalent to the following formula
[Formula 7]

$$F_p(\omega) = \sum_{k=0}^{N-1} F_p(\omega_0 + k \cdot \Delta\omega) \cdot \Psi(\omega - (\omega_0 + k \cdot \Delta\omega))$$

where
[Formula 8]

$$\Psi(\omega) = \frac{1}{N} \cdot \exp\left(-j\frac{(N-1)\pi \cdot \omega}{N\Delta\omega}\right) \cdot \frac{\sin\left(\frac{\pi \cdot \omega}{\Delta\omega}\right)}{\sin\left(\frac{\pi \cdot \omega}{N \cdot \Delta\omega}\right)}$$

where
$\omega$ is an angular frequency of interest,
$F_P(\omega)$ is the spectrum value at the angular frequency $\omega$,
$\Delta\omega$ is the distance between discrete spectra,
$\omega O$ is an arbitrary reference angular frequency,
including $\omega_0 = 0$, and
$\Psi(\omega)$ is an interpolation function; and
an output section which outputs the spectrum value $F_P(\omega)$ obtained by the calculation section.

**6.** The spectrum interpolation storage medium storing the spectrum interpolation program according to claim 5, wherein the calculation section obtains the spectrum value $F_P(\omega)$ at the arbitrary frequency $f = \omega/2\pi$ in accordance with the following formula
[Formula 9]

$$F_p(\omega) = R_p(0)\cdot\Psi(\omega) + R_p\left(\frac{N}{2}\cdot\Delta\omega\right)\cdot\Psi\left(\omega-\left(\frac{N}{2}\cdot\Delta\omega\right)\right)$$

$$+ \sum_{k=1}^{N/2-1} F_p(k\cdot\Delta\omega)\cdot\Psi(\omega-k\cdot\Delta\omega) + \sum_{k=1}^{N/2-1}\left(F_p(k\cdot\Delta\omega)\right)^*\cdot\Psi(\omega+k\cdot\Delta\omega)$$

which is one of the equivalent formulae,
where
$R_P(k)$ is the real part of a complex number $F_P(k)$, and
$F_P(k)^*$ is the conjugate complex number of $F_P(k)$.

Fig. 1

Fig. 2

CD-ROM ~ 401

Spectrum interpolation program ~ 410

Acquisition section ~ 411

Calculation section ~ 412

Output section ~ 413

# Fig. 3

420

421 422 423

| Acquisition section | → | Calculation section | → | Output section |

# Fig. 4

Fig. 5

Fig. 6

Fig. 7

Fig. 8

Fig. 9

Fig. 10